# FASCICULE DE BREVET EUROPEEN

(11) **EP 4 259 521 B1**
(45) Date de publication et mention de la délivrance du brevet: **11.09.2024**
(21) Numéro de dépôt: 21840650.2
(22) Date de dépôt: 03.12.2021
(51) Int. Cl.: B64C 27/04, B64C 27/14, B64D 27/02, B64D 35/02

(54) **SYSTEME PROPULSIF HYBRIDE POUR UN HELICOPTERE**
HYBRIDES ANTRIEBSSYSTEM FÜR EINEN HUBSCHRAUBER
HYBRID PROPULSION SYSTEM FOR A HELICOPTER

(30) Priorité: 11.12.2020 FR 2013046
(43) Date de publication de la demande: 18.10.2023
(73) Titulaire: Safran Helicopter Engines, 64510 Bordes (FR)
(72) Inventeur: THIRIET, Romain, Jean, Gilbert, 77550 MOISSY-CRAMAYEL (FR); MERCIER-CALVAIRAC, Fabien, 77550 MOISSY-CRAMAYEL (FR); DOUILLARD, Stéphane, Albert, André, 77550 MOISSY-CRAMAYEL (FR)
(74) Mandataire: Cabinet Beau de Loménie
(86) Numéro de dépôt international: PCT/FR2021/052209
(87) Numéro de publication internationale: WO 2022/123158

(56) Documents cités:
- EP-A1- 3 034 834
- EP-A2- 2 571 763
- EP-B1- 2 571 763
- FR-A1- 2 962 404
- FR-A1- 3 062 882

## Description

### Domaine Technique

La présente invention se rapporte au domaine général des systèmes propulsifs d'hélicoptère et plus particulièrement au domaine des systèmes propulsifs hybrides pour hélicoptère notamment un hélicoptère dit monomoteur.

### Technique antérieure

Un hélicoptère monomoteur est un hélicoptère comprenant un système propulsif incluant un unique moteur principal, à savoir généralement un moteur à combustion interne et par exemple un turbomoteur, pour entraîner un rotor principal via une boîte de transmission principale, dite BTP, et un rotor arrière de queue (connu également sous l'acronyme RAC pour rotor anticouple) via une boîte de transmission arrière, dite BTA.

Le système propulsif peut comprendre en outre un dispositif d'assistance de l'hélicoptère. Le dispositif d'assistance est utilisé en situation d'urgence afin d'apporter momentanément de la puissance à l'hélicoptère, et plus précisément aux rotors principal et arrière.

Un premier cas d'urgence est la panne du moteur principal. Dans cette situation, le pilote entame alors une procédure de vol dégradée connue sous les termes de vol en autorotation. Le dispositif d'assistance permet d'assister mécaniquement l'hélicoptère au cours du vol en autorotation, et notamment au cours des premières et/ou dernières phases de vol (réalisation du « flare » en amont de l'atterrissage). Un tel dispositif d'assistance permet ainsi d'aider significativement le pilote à réussir un atterrissage en autorotation.

Un deuxième cas d'urgence est un besoin immédiat de puissance supplémentaire lors par exemple d'un évitement d'obstacles ou d'une inversion de température en altitude.

Il est connu du document FR 3 019 588 différentes architectures d'intégration d'un dispositif d'assistance. Le dispositif d'assistance comprend une turbine d'entraînement en rotation d'un arbre, alimentée par un générateur de gaz à stockage solide et des moyens commandés d'alimentation de la turbine d'entraînement. La puissance mécanique de rotation de l'arbre est, dans le cas présent, utilisée pour entraîner le rotor principal de l'hélicoptère en introduisant cette puissance soit directement au niveau de la BTP, soit au niveau d'un arbre de transmission avant, soit au niveau d'un arbre d'une turbine libre du turbomoteur (moteur principal).

De tels systèmes propulsifs posent des problèmes d'encombrement. En effet, l'intégration d'un tel dispositif d'assistance dans un compartiment moteur d'ores et déjà compact engendre d'importantes modifications aussi bien au niveau de la cellule de l'hélicoptère qu'au niveau du moteur principal, et de la transmission de puissance entre le moteur principal et la BTP.

En outre, l'introduction de cette puissance sur la turbine libre du turbomoteur principal présente plusieurs inconvénients.

Un premier inconvénient est qu'en cas de panne d'alimentation en gaz de la turbine libre du turbomoteur principal, celle-ci ne produit plus de couple moteur et va décélérer très rapidement sous l'effet des pertes par frottements aérodynamiques. Ces pertes peuvent atteindre plusieurs dizaines de kilowatts (kW). On comprend ainsi que suivant les cas d'application cités ci-dessus à savoir panne du moteur principal ou besoin immédiat de puissance supplémentaire pour éviter un obstacle, la puissance motrice effectivement vue par le rotor principal est différente, ce qui pourrait surprendre le pilote de l'hélicoptère.

Un deuxième inconvénient est qu'en injectant la puissance d'assistance via la turbine libre, il n'est pas possible de fournir cette puissance d'assistance aux boîtes de transmission principale et arrière en cas de pannes de la dite turbine libre et/ou des composants du turbomoteur mécaniquement en aval, et notamment le réducteur du turbomoteur pour des turbomoteurs équipés d'un tel réducteur.

Un troisième inconvénient est qu'il faut prévoir une interface spécifique sur le turbomoteur pour permettre l'injection de cette puissance d'assistance sur la turbine libre.

Par ailleurs, la puissance des turbomoteurs d'hélicoptères est limitée thermodynamiquement, et aussi mécaniquement du fait que le couple mécanique transmis au rotor principal d'un hélicoptère transite par le réducteur et par la boîte de transmission principale.

Lorsque les températures ambiantes et l'altitude sont basses, il est connu que la puissance qui transite via l'entrée BTP est limitée par conception par une valeur de couple à ne pas dépasser en continu. Ainsi, lorsque la vitesse de rotation du rotor de l'hélicoptère diminue, pour limiter les nuisances acoustiques par exemple, la puissance délivrée au rotor diminue proportionnellement. En revanche, lorsque les températures et l'altitude sont élevées, la puissance délivrée par un turbomoteur d'hélicoptère est limitée par la puissance thermodynamique de la turbine libre.

Il est connu du document FR 3 062 882 un système propulsif d'un hélicoptère monomoteur comprenant un moteur principal relié à un arbre de transmission avant et un arbre de transmission arrière, respectivement, aptes à entraîner une BTP et une BTA; un dispositif d'assistance fixé au moteur principal et permettant d'entraîner mécaniquement les BTA et BTP par introduction de puissance sur ledit arbre de transmission arrière.

Cependant, le dispositif d'assistance décrit dans ce document utilise une source d'énergie auxiliaire telle que des moyens pyrotechniques et/ou électrotechniques et/ou électriques et/ou hydrauliques et/ou pneumatiques. Cette source d'énergie auxiliaire forme un élément supplémentaire à intégrer dans le système propulsif de l'hélicoptère, augmentant par conséquent l'encombrement et la masse totale du dispositif d'assistance et donc du système propulsif.II est également connu du document FR 3 080 835 un système d'assistance ne possédant qu'une seule machine électrique, réversible, qui a besoin d'être associée à un accumulateur pour fonctionner en mode moteur et assister le moteur principal via la BTP. La disponibilité et la durée d'assistance permise par le système est forcément limitée par la capacité de l'accumulateur et sa charge effective au moment du besoin.

Il est connu dans le document EP 2 571 763 un système propulsif pour hélicoptères selon le préambule de la revendication 1. Il est aussi connu des documents EP 3 304 834 et FR 2 962 404 des systèmes propulsifs selon l'état de la technique.

### Exposé de l'invention

A cet effet, la présente invention propose un système propulsif d'un hélicoptère comprenant un dispositif d'assistance permettant de remédier aux inconvénients précités et notamment d'optimiser l'intégration du dispositif d'assistance en réduisant la masse et l'encombrement.

Dans un objet de l'invention, il est proposé un système propulsif pour un hélicoptère comprenant un moteur principal, un rotor principal, une boîte de transmission principale comportant une sortie raccordée mécaniquement au rotor principal, un réducteur mécaniquement couplé entre le moteur principal et une première entrée de la boîte de transmission principale, et un dispositif d'assistance, tel que défini dans la revendication 1.

Selon une caractéristique technique de l'invention, le dispositif d'assistance comprend une première machine électrique mécaniquement couplée au réducteur et configurée pour fonctionner en générateur électrique pour prélever de l'énergie produite par le moteur principal, et une seconde machine électrique mécaniquement couplée à une seconde entrée de la boîte de transmission principale, la seconde machine électrique étant électriquement alimentée par la première machine électrique et configurée pour fonctionner en moteur électrique pour délivrer une puissance mécanique supplémentaire à la boîte de transmission principale.

Le système propulsif selon l'invention propose ainsi une architecture applicable aussi bien aux turbomoteurs à turbines libres qu'aux turbomoteurs à turbines liées, et permettant d'utiliser toute la puissance thermodynamique disponible en amont du réducteur via une dérivation de puissance électrique réalisée à l'aide de deux machines électriques générant un couplage auxiliaire entre le moteur principal et la boîte de transmission principale.

En effet, le système de propulsion selon l'invention permet ainsi d'avoir un dispositif d'assistance utilisant l'énergie supplémentaire que peut fournir le moteur principal pour compenser les pertes de couple générées par le réducteur. Autrement dit, les pertes de puissance induites par le réducteur sont restaurées grâce à la quantité d'énergie disponible sur le générateur à gaz et qui peut être transformée par le dispositif d'assistance en énergie électrique propulsive, c'est-à-dire utilisée pour délivrer une puissance mécanique supplémentaire à la boîte de transmission principale.

Ainsi, lorsque que la puissance délivrée à la BTP est limitée par le couple maximum autorisé en sortie du groupe motopropulseur comportant le moteur principal et le réducteur, et/ou en entrée de la BTP, la machine électrique montée en amont du réducteur fournit de l'énergie électrique à l'autre machine électrique fonctionnant en mode moteur sur une autre entrée de la BTP. Ce supplément de puissance qui transite dans le mat du rotor principal peut être utilisé pour des cas d'urgence nécessitant un surplus de portance (évitement d'obstacles...) sans endommager le réducteur.

Selon un premier aspect du système propulsif, le système propulsif peut comprendre en outre une unité de commande électronique électriquement couplée aux première et seconde machines électriques et configurée pour piloter le fonctionnement des première et seconde machines électriques en fonction du couple disponible en sortie du moteur principal et du couple requis en sortie de la boîte de transmission principale.

Selon un deuxième aspect du système propulsif, l'unité de commande électronique peut comprendre des moyens de mesure configurés pour mesurer en continu le couple instantané sur la première entrée de la boîte de transmission principale, et des moyens de commande configurés pour commander le fonctionnement de la première machine électrique pour alimenter la seconde machine électrique lorsque le couple mesuré par les moyens de mesure est inférieur au couple requis en sortie de la boîte de transmission principale, et commander une augmentation du régime de fonctionnement du moteur principal pour fournir l'énergie supplémentaire nécessaire à l'alimentation électrique de la seconde machine électrique.

Le couple instantané mesuré sur la première entrée de la boîte de transmission principale peut aussi être comparé à un couple maximum autorisé sur cette première entrée. Si le couple mesuré atteint le couple maximum autorisé, l'unité de commande électronique peut commander de ne plus augmenter le régime de fonctionnement du moteur principal, tout en continuant à commander le fonctionnement en générateur de la première machine électrique pour alimenter la seconde machine électrique.

Selon un troisième aspect du système propulsif, l'unité de commande peut être configurée pour piloter les première et secondes machines électriques pour pallier le manque de puissance en sortie de la boîte de transmission principale lorsque le rotor principal fonctionne à un régime inférieur à son régime nominal dans une phase de vol nécessitant que le rotor principal fonctionne audit régime nominal.

Selon l'invention, le moteur principal comprend un arbre de sortie mécaniquement raccordé au réducteur, et la première machine électrique comprend un rotor et un stator, le rotor étant formé par une portion électromagnétique de l'arbre de sortie du moteur principal et le stator étant monté autour de ladite portion électromagnétique de l'arbre de sortie du moteur principal.

Selon un cinquième aspect du système propulsif, dans la première machine électrique le réducteur peut être un réducteur épicycloïdal couplé à la fois au moteur principal, à la première machine électrique et à la boîte de transmission principale. Selon un sixième aspect du système propulsif, le système propulsif peut comprendre en outre une roue libre couplée en sortie du réducteur, un arbre de transmission arrière couplé entre la roue libre et un rotor anti-couple, et un arbre de transmission avant couplé entre la première entrée de la boîte de transmission principale et la roue libre.

Selon un septième aspect du système propulsif, le dispositif d'assistance peut comprendre en outre au moins un moyen de stockage d'énergie électriquement couplé à la première machine électrique. L'unité de commande électronique peut alors être configurée pour transmettre l'énergie électrique de la première machine électrique soit au moyen de stockage d'énergie soit à la seconde machine électrique en fonction des besoins d'énergie lorsque la première machine électrique produit de l'électricité.

Selon un autre objet de l'invention, il est proposé un hélicoptère comprenant un système propulsif tel que défini ci-dessus.

Selon un autre objet de l'invention, il est proposé un procédé d'assistance d'un système propulsif pour un hélicoptère tel que défini ci-dessus, le procédé comprenant une demande d'activation de prélèvement d'énergie mécanique du moteur principal du système propulsif par une commande du fonctionnement en générateur électrique de la première machine électrique, la demande d'activation étant issue d'une décision dépendant d'au moins une condition particulière vérifiée par le pilote de l'hélicoptère, ou par un calculateur de contrôle du moteur, ou par l'avionique de l'hélicoptère.

Dans un aspect du procédé d'assistance, la demande d'activation peut être issue d'une décision du calculateur de contrôle du moteur lorsqu'il détecte que le point de fonctionnement du moteur principal se situe dans un ensemble de points de fonctionnement prédéterminés pour lesquels le régime de fonctionnement du moteur principal est inférieur à un seuil de pourcentage du régime de fonctionnement nominal du moteur principal et pour lesquels un transitoire d'accélération pour revenir à un régime élevé supérieur audit seuil de pourcentage est jugé trop long par rapport à une dynamique souhaitée du moteur principal et de l'hélicoptère, et dans lequel la demande d'activation s'accompagne d'une commande d'augmentation du régime de fonctionnement du moteur principal de façon à ce que la durée d'un éventuel transitoire d'accélération soit diminuée pour correspondre à ladite dynamique souhaitée.

De préférence, ledit seuil de pourcentage du régime de fonctionnement nominal du moteur principal est compris entre 80% et 85%.

### Brève description des dessins

[Fig. 1] La figure 1 est une représentation schématique d'un hélicoptère doté d'un système propulsif selon un premier mode de réalisation.
[Fig. 2] La figure 2 est une représentation schématique d'un hélicoptère doté d'un système propulsif selon un mode de réalisation de l'invention.
[Fig. 3] La figure 3 présente un ordinogramme d'un procédé d'assistance d'un système propulsif d'un hélicoptère selon un mode de mise en oeuvre de l'invention.

### Description des modes de réalisation

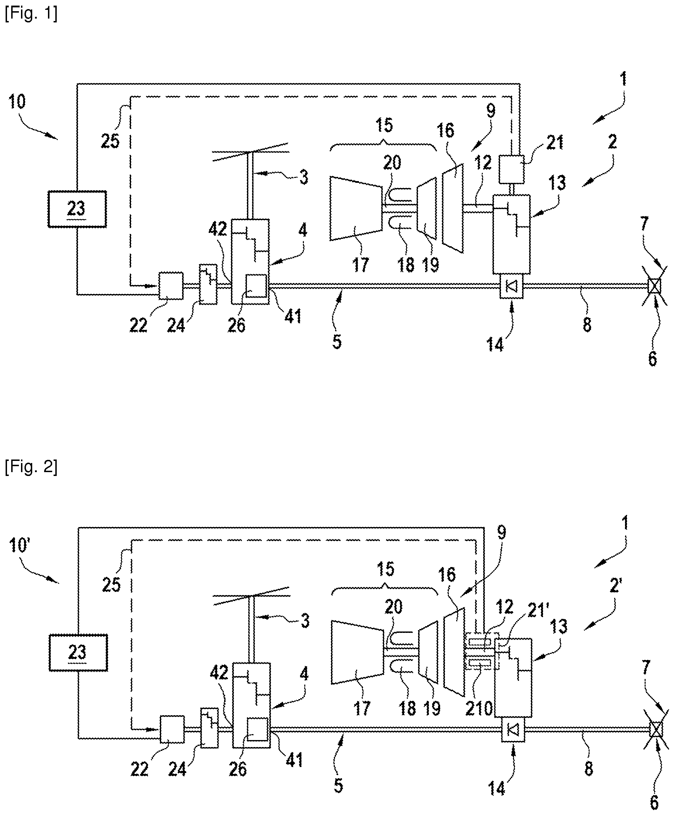

Sur la figure 1 est présenté schématiquement un hélicoptère 1 comprenant un système propulsif 2 selon un premier mode de réalisation qui ne décrit pas entièrement l'invention.

Le système propulsif 2 comprend un rotor principal 3, une boîte de transmission principale 4 (ci-après dénommée BTP), un arbre de transmission avant 5, une boîte de transmission arrière 6 (ci-après dénommée BTA) et un rotor arrière 7 communément appelé rotor anti-couple (RAC). Le rotor principal 3 est entraîné par la BTP 4 qui est elle-même entraînée par l'arbre de transmission avant 5. De la même manière, le rotor arrière 7 est entraîné par la BTA 6 qui est elle-même entraînée par un arbre de transmission arrière 8. Dans le cas présent, les arbres de transmission avant et arrière 5, 8 sont sensiblement coaxiaux.

Le système propulsif 2 de l'hélicoptère 1 comprend en outre un moteur principal 9 et un dispositif d'assistance 10 utilisé en situation d'urgence afin d'apporter momentanément de la puissance supplémentaire à l'hélicoptère 1, et plus précisément au rotor principal 3.

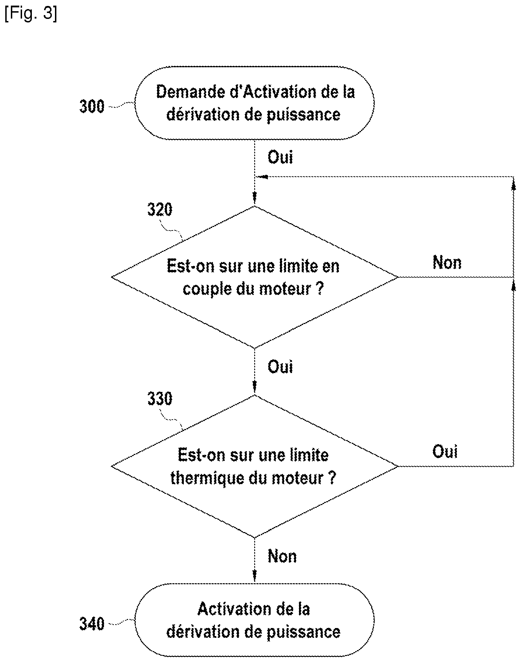

Selon le mode de réalisation illustré sur la figure 1 et 3, le moteur principal 9 comprend un arbre de sortie 12 relié mécaniquement aux arbres de transmission avant et arrière 5, 8 via un réducteur 13 puis une première roue libre 14, dite propulsive. On note que dans la présente invention, les termes « avant » et 10 « arrière » associés aux arbres de transmission 5, 8 sont exprimés en fonction de la première roue libre 14.

Tel qu'illustré sur la figure 1, le moteur principal 9 est ici un turbomoteur formé d'un générateur de gaz 15 et d'une turbine libre 16 sur laquelle est fixé l'arbre de sortie 12. Le générateur de gaz 15 comprend de manière connue au moins un compresseur 17 d'air alimentant une chambre de combustion 18 d'un carburant dans l'air comprimé qui délivre des gaz chauds à au moins une turbine de détente 19 des gaz qui entraîne en rotation le compresseur 17 via un arbre d'entraînement 20. Les gaz entraînent ensuite la turbine libre 16 de transmission de puissance, également appelée turbine de puissance.

En variante, de manière générale, le moteur principal 9 peut correspondre à tout type de moteur à combustion interne.

Tel qu'illustré sur la figure 1, le dispositif d'assistance 10 comprend une première machine électrique 21, une seconde machine électrique 22 et une unité de commande électronique 23.

La première machine électrique 21 est couplée mécaniquement au réducteur 13 et est configuré pour fonctionner en générateur d'énergie électrique, transformant ainsi l'énergie mécanique prélevée sur le moteur principal 9 via le réducteur 13 en énergie électrique.

La seconde machine électrique 22 est mécaniquement raccordée à la BTP 4 éventuellement via un engrenage 24, comme cela est illustré sur la figure 1, et électriquement raccordée à la première machine électrique 21 via au moins un câble 25. Grâce au câble 25, la première machine électrique 21 peut ainsi alimenter la seconde machine électrique 22 en électricité à partir d'une partie de l'énergie délivrée par le moteur principale 9 et récupérée via le réducteur 13.

La seconde machine électrique 22 est configurée quant à elle pour fonctionner comme un moteur électrique, et ainsi délivrer de la puissance mécanique, sous forme d'un couple mécanique, à la BTP 4 à partir de l'énergie électrique fournie par la première machine électrique via le câble 15.

L'unité de commande électronique 23 est non seulement couplée à la première machine électrique 21 et à la seconde machine électrique 22 comme cela est illustré sur la figure 1 mais également au moteur principal 9.

L'unité de commande électronique 23 est configurée pour commander le fonctionnement des première et seconde machines électriques 21 et 22 en fonction du couple reçu en entrée de la BTP 4 et du couple requis en sortie de la BTP 4 par le rotor principal 3.

La BTP 4 comprend une première entrée 41 mécaniquement raccordée à l'arbre de transmission avant 5 et une seconde entrée mécaniquement raccordée à la seconde machine électrique 22 éventuellement via l'engrenage 24. L'unité de commande électronique 23 comprend un module 26 de mesure de couple montée sur la première entrée 41 et configuré pour mesurer en continu le couple reçu sur la première entrée 41 du BTP, ce couple mécanique étant issu du réducteur 13 via la roue libre 14.

Lorsque le couple requis en sortie du BTP 4 est supérieur au couple mesuré sur sa première entrée 41, l'unité de commande électronique 23 pilote le moteur principale 9 pour produire un couple mécanique plus important que celui qu'il produit actuellement, et active la première machine électrique 21 pour qu'elle prélève la portion de couple supplémentaire fournie par le moteur principal 9 et alimente ainsi en électricité la seconde machine électrique 22 qui peut alors fournir un couple mécanique additionnel sur la seconde entrée 42 de la BTP 4. La BTP 4 peut alors fournir un couple supérieur au couple mécanique reçu sur sa première entrée 41, voire même égal au couple requis pour le rotor principal 2.

Ainsi, lorsque le régime du Générateur de Gaz 15 (NG) de la turbomachine est faible, c'est-à-dire inférieur à 85% du régime nominal du générateur de gaz 15, les transitoires pour revenir à un régime élevé, c'est-à-dire supérieur à 85% du régime nominal du générateur de gaz, peuvent être longs avec des dispositifs d'assistance tels que décrits dans l'état de l'art, et la dynamique de la turbomachine et donc de l'hélicoptère sont fortement impactées.

Grâce à la dérivation de puissance mise en oeuvre par le dispositif d'assistance 10 du système propulsif 2 selon l'invention, il est possible grâce au pilotage du moteur principal 9 et des première et seconde machines électriques 21 et 22 par l'unité de commande électronique 23, de dériver artificiellement de la puissance à travers le circuit électrique à des régimes dits élevés.

En maintenant un régime élevé, il est possible de répartir la puissance pour partie sur le couple mécanique injecté dans la BTP 4, et pour le reste vers la première machine électrique 21 qui produira de l'électricité pouvant au choix alimenter la seconde machine électrique ou charger un stockeur d'énergie telle qu'une batterie par exemple. Il est également envisageable de prévoir des moyens de dissipation de l'électricité produite par la première machine électrique 21, par exemple de dissipation thermique à l'aide de résistances électriques, pouvant être commandés sélectivement en particulier dans le cas évoqué plus loin où l'on souhaite augmenter artificiellement le régime du générateur de gaz. Cette dissipation de l'électricité produite peut permettre d'augmenter l'énergie prélevée par la dérivation de puissance, et/ou de dissiper l'énergie prélevée lorsque la batterie est pleine et la seconde machine électrique 22 n'a pas besoin d'être activée, et donc dans tous les cas d'augmenter le régime du générateur de gaz tout en restant à iso-couple mécanique injecté dans la BTP 4.

Pour que la dérivation de puissance soit activée (étape 340), il faut qu'au moins deux conditions soient réunies, comme cela est indiqué sur la figure 3 qui présente un ordinogramme d'un procédé d'assistance d'un système propulsif d'un hélicoptère selon un mode de mise en oeuvre. Suite à une demande d'activation de la dérivation de puissance (étape 300), il faut vérifier (étape 320) qu'on est sur une limite du couple moteur qui correspond à une limite du couple que le réducteur peut faire transiter et/ou que la BTP peut accepter sur sa première entrée 41, et vérifier (étape 330) qu'on n'est pas sur une limite thermique du moteur (limite qui peut être fonction du régime du générateur de gaz 15 ou d'une température dans un compartiment donné du moteur).

La demande d'activation de la dérivation de puissance peut être issue d'une décision dépendant d'au moins une condition particulière vérifiée par le pilote de l'hélicoptère, ou par un calculateur de contrôle du moteur tel qu'un FADEC, ou encore par l'avionique de l'hélicoptère, cette liste n'étant pas exhaustive. Ainsi, parmi les différentes sortes de décisions pouvant chacune déclencher une demande d'activation de la dérivation de puissance, on notera en particulier les trois catégories suivantes.

Une décision émanant du pilote. Le pilote sait qu'en demandant d'activer la dérivation de puissance en limite du couple à la sortie de la turbine à gaz (ou à l'entrée de la BTP), il aura un système propulsif plus réactif. En effet, l'activation de la dérivation de puissance entraîne une augmentation du régime de fonctionnement du moteur principal du système propulsif, c'est-à-dire le régime du générateur de gaz du moteur, ou des régimes des moteurs principaux dans le cas d'un bimoteur ou trimoteur. Ce régime augmenté est favorable pour les capacités d'accélération du système propulsif, notamment lors d'un décollage sans panne moteur (appelé décollage AEO pour All Engine Operating) mais surtout lors d'un décollage avec panne sur l'un des moteurs (appelé décollage OEI pour One Engine Inoperative) quand le système propulsif de l'hélicoptère est bimoteur ou trimoteur.

Une décision provenant du calculateur de contrôle du moteur (FADEC). Dans une première configuration, le calculateur surveille en temps réel l'erreur sur le régime du rotor principal, cette erreur étant l'écart entre le régime du rotor principal mesuré et le régime de consigne du rotor principal. Si la valeur de cet écart est trop élevée (la différence entre la consigne et la mesure est supérieure à un seuil), c'est que l'on est dans le cas d'une demande importante de puissance transitoire supplémentaire. La dérivation de puissance peut alors aider à faire remonter le régime effectif du rotor principal.

Dans une seconde configuration, le calculateur surveille en temps réel la variation temporelle du régime du rotor principal. Sans attendre que le régime du rotor principal soit à une valeur critique, par exemple inférieure à 85% du régime nominal du rotor principal, le calculateur déclenche la dérivation de puissance si la pente de la décroissance de la variation temporelle du régime du rotor principal est supérieure à un seuil en valeur absolue.

Une décision émanant de l'avionique. Par exemple, si la vitesse horizontale de l'hélicoptère mesurée par l'avionique est inférieure à un seuil, par exemple égal à 50 noeuds, cela signifie que l'hélicoptère est en phase de décollage ou d'atterrissage. Il y a donc un intérêt à faire de la dérivation de puissance en continu en limite du couple de sortie de la turbine libre du générateur de gaz, pour augmenter le régime du générateur de gaz afin de pouvoir pallier à un éventuel cas de décollage ou d'atterrissage avec panne sur l'un des moteurs (OEI). Dans un autre exemple, si la consigne du régime du rotor principal est stabilisée en dessous du régime nominal du rotor principal, par exemple à 90% du régime nominal afin de limiter le bruit, cela implique que le régime du rotor principal est régulé à une valeur basse relativement proche du régime de décrochage du rotor principal (ce régime de décrochage étant par exemple situé entre 80% et 85% du régime nominal). La dérivation de puissance permet alors d'augmenter le régime NG des deux moteurs principaux pour un système propulsif bimoteur. Ceci implique qu'en cas de panne OEI de l'un des moteurs, le régime plus élevé du moteur sain lui permet de disposer d'une réserve de couple supplémentaire pouvant être fournie instantanément au rotor principal par désactivation de la dérivation de puissance, ce qui permet de limiter la chute du régime NR consécutive à la panne OEI, de telle façon que le régime NR soit maintenu au-dessus du régime de décrochage.

Une fois la dérivation de puissance activée, la dégradation du rendement sur certains points de fonctionnement va certes augmenter légèrement la consommation de carburant mais va surtout permettre d'augmenter artificiellement le régime du générateur de gaz 15 tout en restant à iso-couple mécanique injecté dans la BTP 4.

En mémorisant dans l'unité de commande électronique les points de fonctionnement du moteur principal 9 qui ne permettent pas un transitoire satisfaisant lors d'une accélération pour garantir le bon régime du rotor principal 3 de l'hélicoptère 1, le dispositif d'assistance 10 permet de disposer d'une réserve de couple instantanée supplémentaire. Ainsi, une demande d'activation de la dérivation de puissance peut être issue d'une décision du calculateur de contrôle du moteur lorsqu'il détecte que le point de fonctionnement du moteur principal 9 se situe dans un ensemble de points de fonctionnement prédéterminés pour lesquels le régime de fonctionnement du moteur principal est inférieur à un seuil de pourcentage du régime de fonctionnement nominal du moteur principal, et pour lesquels un transitoire d'accélération pour revenir à un régime élevé supérieur audit seuil de pourcentage est jugé trop long. La durée d'un transitoire d'accélération peut en effet être jugée trop longue par rapport à une dynamique souhaitée du moteur principal et donc de l'hélicoptère. La demande d'activation de la dérivation de puissance s'accompagne alors d'une commande d'augmentation du régime de fonctionnement NG du moteur principal, de façon à ce que la durée d'un éventuel transitoire d'accélération soit diminuée pour correspondre à la dynamique souhaitée du moteur principal.

Ledit seuil de pourcentage du régime de fonctionnement nominal du moteur principal peut être compris entre 80% et 85%.

Cette stratégie de pilotage et les effets escomptés sont rendus possibles grâce à la technologie électrique et la rapidité de pilotage qui permettent une chute instantanée du couple prélevé pour la dérivation de puissance sur l'arbre de sortie de la turbomachine.

Sur la figure 2 est représenté schématiquement un hélicoptère 1 doté d'un système propulsif 2' selon un mode de réalisation de l'invention.

Les éléments identiques au premier mode de réalisation illustré sur la figure 1 portent les mêmes références numériques.

Le second mode de réalisation illustré sur la figure 2 diffère du premier mode de réalisation illustré sur la figure 1 en ce que la première machine électrique 21' du dispositif d'assistance 10' comprend un rotor formé par une portion de l'arbre de sortie 12 du moteur principal 9, et plus particulièrement par des éléments électromagnétiques montés sur l'arbre mécanique de sortie 12, et un stator 210 disposé autour de la portion de l'arbre de sortie 12 formant le rotor.

La première machine électrique 21' est ainsi raccordée en amont du réducteur 13, plus particulièrement entre le moteur principal 9 et le réducteur 13.

Le système propulsif selon invention fournit ainsi un dispositif d'assistance permettant d'optimiser l'intégration du dispositif d'assistance en réduisant la masse et l'encombrement.

## Revendications

1. Système propulsif (2) pour un hélicoptère (1), ledit système propulsif (2) comprenant un moteur principal (9), un rotor principal (3), une boîte de transmission principale (4) comportant une sortie raccordée mécaniquement au rotor principal (3) et une première entrée (41), le moteur principal (9) comprenant un arbre de sortie (12) entraîné par une turbine de puissance du moteur principal (9), le système propulsif (2)
comportant en outre un dispositif d'assistance (10) comprenant une première machine électrique (21') configurée pour fonctionner en générateur électrique pour prélever de l'énergie produite par le moteur principal (9), et une seconde machine électrique (22) mécaniquement couplée à une seconde entrée (42) de la boîte de transmission principale (4), la seconde machine électrique (22) étant électriquement alimentée par la première machine électrique (21') et configurée pour fonctionner en moteur électrique pour délivrer une puissance mécanique supplémentaire à la boîte de transmission principale (4) lorsque requis, **caractérisé en ce que** le moteur principal (9) comprend en outre un réducteur (13) mécaniquement couplé entre le moteur principal (9) et la première entrée (41) de la boîte de transmission principale (4), et **en ce que** l'arbre de sortie (12) est mécaniquement raccordé au réducteur (13), et **en ce que** la première machine électrique (21') est mécaniquement couplée au réducteur (13) et comprend un rotor et un stator (210), le rotor étant formé par une portion électromagnétique de l'arbre de sortie (12) du moteur principal (9) et le stator (210) étant monté autour de ladite portion électromagnétique de l'arbre de sortie du moteur principal (9).

2. Système propulsif (2) selon la revendication 1, comprenant en outre une unité de commande électronique (23) électriquement couplée aux première et seconde machines électriques (21', 22) et configurée pour piloter le fonctionnement des première et seconde machines électriques (21', 22) en fonction du couple disponible en sortie du moteur principal (9) et du couple requis en sortie de la boîte de transmission principale (4).

3. Système propulsif (2) selon la revendication 2, dans lequel l'unité de commande électronique (23) comprend des moyens de mesure (26) configurés pour mesurer en continu le couple instantané sur la première entrée (41) de la boîte de transmission principale (4), et des moyens de commande configurés pour commander le fonctionnement de la première machine électrique (21, 21') pour alimenter la seconde machine électrique (22) lorsque le couple mesuré par les moyens de mesure (26) est inférieur au couple requis en sortie de la boîte principale (4), et commander une augmentation du régime de fonctionnement du moteur principal (9) pour fournir l'énergie supplémentaire nécessaire à l'alimentation électrique de la seconde machine électrique (22).

4. Système propulsif (2) selon l'une des revendications 2 ou 3, dans lequel l'unité de commande électronique (23) est configurée pour piloter les première et secondes machines électriques (21', 22) pour pallier le manque de puissance en sortie de la boîte de transmission principale (4) lorsque le rotor principal (3) fonctionne à un régime inférieur à son régime nominal dans une phase de vol nécessitant que le rotor principal (3) fonctionne audit régime nominal.

5. Système propulsif (2) selon l'une des revendications 1 à 4, dans lequel le réducteur (13) est un réducteur épicycloïdal couplé à la fois au moteur principal (9), à la première machine électrique (21') et à la boîte de transmission principale (4).

6. Système propulsif (2) selon l'une des revendications 1 à 5, comprenant en outre une roue libre (14) couplée en sortie du réducteur (13), un arbre de transmission arrière (8) couplé entre la roue libre (14) et un rotor anti-couple (7), et un arbre de transmission avant (5) couplé entre la première entrée (41) de la boîte de transmission principale (4) et la roue libre (14).

7. Système propulsif (2) selon l'une des revendications 2 à 6, dans lequel le dispositif d'assistance (10) comprend en outre au moins un moyen de stockage d'énergie électriquement couplé à la première machine électrique (21').

8. Hélicoptère comprenant un système propulsif (2) selon l'une des revendications 1 à 7.

9. Procédé d'assistance d'un système propulsif (2) pour un hélicoptère (1) selon l'une des revendications 1 à 7, le procédé comprenant une demande d'activation de prélèvement d'énergie mécanique du moteur principal (9) du système propulsif (2) par une commande du fonctionnement en générateur électrique de la première machine électrique (21'), la demande d'activation étant issue d'une décision dépendant d'au moins une condition particulière vérifiée par le pilote de l'hélicoptère, ou par un calculateur de contrôle du moteur, ou par l'avionique de l'hélicoptère.

10. Procédé d'assistance selon la revendication 9, dans lequel la demande d'activation est issue d'une décision du calculateur de contrôle du moteur lorsqu'il détecte que le point de fonctionnement du moteur principal (9) se situe dans un ensemble de points de fonctionnement prédéterminés pour lesquels le régime de fonctionnement du moteur principal est inférieur à un seuil de pourcentage du régime de fonctionnement nominal du moteur principal et pour lesquels un transitoire d'accélération pour revenir à un régime élevé supérieur audit seuil de pourcentage est jugé trop long par rapport à une dynamique souhaitée du moteur principal et de l'hélicoptère, et dans lequel la demande d'activation s'accompagne d'une commande d'augmentation du régime de fonctionnement du moteur principal de façon à ce que la durée d'un éventuel transitoire d'accélération soit diminuée pour correspondre à ladite dynamique souhaitée.

11. Procédé d'assistance selon la revendication 10, dans lequel ledit seuil de pourcentage du régime de fonctionnement nominal du moteur principal est compris entre 80% et 85%.

## Patentansprüche

1. Antriebssystem (2) für einen Hubschrauber (1), das Antriebssystem (2) umfassend einen Hauptmotor (9), einen Hauptrotor (3), ein Hauptgetriebe (4), umfassend einen mechanisch mit dem Hauptrotor (3) verbundenen Ausgang und einen ersten Eingang (41), der Hauptmotor (9) umfassend eine Abtriebswelle (12), die von einer Leistungsturbine des Hauptmotors (9) angetrieben wird, das Antriebssystem (2) ferner umfassend eine Unterstützungsvorrichtung (10), umfassend eine erste elektrische Maschine (21'), die konfiguriert ist, um als elektrischer Generator zu funktionieren, um von dem Hauptmotor (9) erzeugte Energie zu entnehmen, und eine zweite elektrische Maschine (22), die mechanisch mit einem zweiten Eingang (42) des Hauptgetriebes (4) gekoppelt ist, wobei die zweite elektrische Maschine (22) elektrisch von der ersten elektrischen Maschine (21') versorgt wird und konfiguriert ist, um als Elektromotor zu funktionieren, um zusätzliche mechanische Leistung an das Hauptgetriebe (4) abzugeben, wenn dies erforderlich ist,
**dadurch gekennzeichnet, dass** der Hauptmotor (9) ferner ein Untersetzungsgetriebe (13) umfasst, das mechanisch zwischen dem Hauptmotor (9) und dem ersten Eingang (41) des Hauptgetriebes (4) gekoppelt ist, und dass die Abtriebswelle (12) mechanisch mit dem Untersetzungsgetriebe (13) verbunden ist, und dass die erste elektrische Maschine (21') mechanisch mit dem Untersetzungsgetriebe (13) gekoppelt ist und einen Rotor und einen Stator (210) umfasst, wobei der Rotor durch einen elektromagnetischen Abschnitt der Abtriebswelle (12) des Hauptmotors (9) gebildet ist und der Stator (210) um den elektromagnetischen Abschnitt der Abtriebswelle des Hauptmotors (9) montiert ist.

2. Antriebssystem (2) nach Anspruch 1, ferner umfassend eine elektronische Steuereinheit (23), die elektrisch mit der ersten und der zweiten elektrischen Maschine (21', 22) gekoppelt und konfiguriert ist, um den Betrieb der ersten und der zweiten elektrischen Maschine (21', 22) abhängig von dem am Ausgang des Hauptmotors (9) verfügbaren Drehmoment und dem am Ausgang des Hauptgetriebes (4) erforderlichen Drehmoment zu steuern.

3. Antriebssystem (2) nach Anspruch 2, die elektronische Steuereinheit (23) umfassend Messeinrichtungen (26), die konfiguriert sind, um kontinuierlich das momentane Drehmoment an dem ersten Eingang (41) des Hauptgetriebes (4) zu messen, und Steuereinrichtungen, die konfiguriert sind, um den Betrieb der ersten elektrischen Maschine (21, 21') zu steuern, um die zweite elektrische Maschine (22) zu versorgen, wenn das von den Messeinrichtungen (26) gemessene Drehmoment geringer ist als das erforderliche Drehmoment am Ausgang des Hauptgetriebes (4), und eine Erhöhung der Betriebsdrehzahl des Hauptmotors (9) zu steuern, um die zusätzliche Energie bereitzustellen, die für die elektrische Versorgung der zweiten elektrischen Maschine (22) erforderlich ist.

4. Antriebssystem (2) nach einem der Ansprüche 2 oder 3, wobei die elektronische Steuereinheit (23) konfiguriert ist, um die erste und die zweite elektrische Maschine (21', 22) zu steuern, um den Mangel an Leistung an dem Ausgang des Hauptgetriebes (4) auszugleichen, wenn der Hauptrotor (3) in einer Flugphase, in der es erforderlich ist, dass der Hauptrotor (3) mit der Nenndrehzahl funktioniert, mit einer Drehzahl unterhalb seiner Nenndrehzahl funktioniert.

5. Antriebssystem (2) nach einem der Ansprüche 1 bis 4, wobei das Untersetzungsgetriebe (13) ein Planetengetriebe ist, das sowohl mit dem Hauptmotor (9), der ersten elektrischen Maschine (21') als auch mit dem Hauptgetriebe (4) gekoppelt ist.

6. Antriebssystem (2) nach einem der Ansprüche 1 bis 5, ferner umfassend einen Freilauf (14), der mit dem Ausgang des Untersetzungsgetriebes (13) gekoppelt ist, eine hintere Antriebswelle (8), die zwischen dem Freilauf (14) und einem Anti-Drehmoment-Rotor (7) gekoppelt ist, und eine vordere Antriebswelle (5), die zwischen dem ersten Eingang (41) des Hauptantriebsgetriebes (4) und dem Freilauf (14) gekoppelt ist.

7. Antriebssystem (2) nach einem der Ansprüche 2 bis 6, wobei die Unterstützungsvorrichtung (10) ferner mindestens eine Energiespeichereinrichtung umfasst, die elektrisch mit der ersten elektrischen Maschine (21') gekoppelt ist.

8. Hubschrauber, umfassend ein Antriebssystem (2) nach einem der Ansprüche 1 bis 7.

9. Unterstützungsverfahren eines Antriebssystems (2) für einen Hubschrauber (1) nach einem der Ansprüche 1 bis 7, das Verfahren umfassend eine Aktivierungsanforderung zur Entnahme von mechanischer Energie aus dem Hauptmotor (9) des Antriebssystems (2) durch eine Steuerung des Betriebs der ersten elektrischen Maschine (21') als elektrischer Generator, wobei die Aktivierungsanforderung aus einer Entscheidung hervorgeht, die von mindestens einer bestimmten Bedingung abhängt, die von dem Piloten des Hubschraubers oder von einem Motorsteuerungsrechner oder von der Avionik des Hubschraubers überprüft wird.

10. Unterstützungsverfahren nach Anspruch 9, wobei die Aktivierungsanforderung von einer Entscheidung des Motorsteuerungsrechners abgeleitet wird, wenn er erkennt, dass der Betriebspunkt des Hauptmotors (9) in einem Satz von vorbestimmten Betriebspunkten ist, bei denen die Betriebsdrehzahl des Hauptmotors unter einem prozentualen Schwellenwert der Nennbetriebsdrehzahl des Hauptmotors ist, und wobei ein Beschleunigungsübergang zur Rückkehr zu einer hohen Drehzahl oberhalb des genannten Prozentschwellenwerts im Vergleich zu einer gewünschten Dynamik des Haupttriebwerks und des Hubschraubers als zu lang erachtet wird, und wobei die Aktivierungsanforderung mit einem Befehl einhergeht, die Betriebsdrehzahl des Hauptmotors zu erhöhen, sodass die Dauer eines möglichen Beschleunigungsübergangs verkürzt wird, um der gewünschten Dynamik zu entsprechen.

11. Unterstützungsverfahren nach Anspruch 10, wobei die Prozentschwelle der Nennbetriebsdrehzahl des Hauptmotors zwischen 80 % und 85 % ist.

## Claims

1. A propulsion system (2) for a helicopter (1) comprising a main engine (9), a main rotor (3), a main gearbox (4) including an output connected mechanically to the main rotor (3) and a first input (41), and the main engine (9) comprising an output shaft (12) driven by a power turbine of the main engine (9), the propulsion system (2) further comprising an assistance device (10) comprising a first electric machine (21') configured to operate as an electric generator to extract some energy produced by the main engine (9), and a second electric machine (22) mechanically coupled to a second input (42) of the main gearbox (4), the second electric machine (22) being supplied with electrical power by the first electric machine (21') and configured to operate as an electric motor to provide additional mechanical power to the main gearbox (4) when required,
**characterized in that** the main engine (9) comprises a reduction gearbox (13) mechanically coupled between the main engine (9) and the first input (41) of the main gearbox (4), and **in that** the output shaft (12) is mechanically connected to the reduction gearbox (13), and **in that** the first electric machine (21') is mechanically coupled to the reduction gearbox (13) and comprises a rotor and a stator (210), the rotor being formed by an electromagnetic portion of the output shaft (12) of the main engine (9) and the stator (210) being mounted around said electromagnetic portion of the output shaft of the main engine (9).

2. The propulsion system (2) according to claim 1, further comprising an electronic control unit (23) electrically coupled to the first and second electric machines (21', 22) and configured to control the operation of the first and second electric machines (21', 22) depending on the available output torque of the main engine (9) and on the required output torque of the main gearbox (4).

3. The propulsion system (2) according to claim 2, wherein the electronic control unit (23) comprises measurement means (26) configured to continuously measure the instantaneous torque at the first input (41) of the main gearbox (4), and control means configured to control the operation of the first electric machine (21, 21') to supply power to the second electric machine (22) when the torque measured by the measurement means (26) is less than the output torque required from the main gearbox (4), and command an increase of the operating speed of the main engine (9) to supply the additional energy necessary for the electrical power supply of the second electric machine (22).

4. The propulsion system (2) according to one of claims 2 or 3, wherein the electronic control unit (23) is configured to control the first and second electric machines (21', 22) to compensate for the lack of output power of the main gearbox (4) when the main rotor (3) operates at a lower speed than its nominal speed in a flight phase necessitating that the main rotor (3) operate at said nominal speed.

5. The propulsion system (2) according to one of claims 1 to 4, wherein the reduction gearbox (13) is an epicyclic reduction gearbox coupled simultaneously to the main engine (9), to the first electric machine (21') and to the main gearbox (4).

6. The propulsion system (2) according to one of claims 1 to 5, also comprising a free wheel (14) coupled to the output of the reduction gearbox (13), a rear transmission shaft (8) coupled between the free wheel (14) and an anti-torque rotor (7), and a front transmission shaft (5) coupled between the first input (41) of the main gearbox (4) and the free wheel (14).

7. The propulsion system (2) according to one of claims 2 to 6, wherein the assistance device (10) also comprises at least one means for storing energy electrically coupled to the first electric machine (21').

8. A helicopter comprising a propulsion system (2) according to one of claims 1 to 7.

9. A method for assisting a propulsion system (2) for a helicopter (1) according to one of claims 1 to 7, the method comprising a demand for activating taking off energy from the main engine (9) of the propulsion system (2) by means of a command to operate as an electric generator of the first electric machine (21'), the activation demand being the result of a decision depending on at least one particular condition verified by the pilot of the helicopter, or by a control computer of the engine, or by the avionics of the helicopter.

10. The assistance method according to claim 9, wherein the activation demand is the result of a decision of the control computer of the engine when it detects that the operating point of the main engine (9) is located within a set of predetermined operating points for which the operating regime of the main engine is less than a percentage threshold of the nominal operating speed of the main engine and for which an acceleration transient to return to a faster speed greater than said percentage threshold is considered too long compared to a desired dynamics of the main engine and of the helicopter, and in which the activation demand is accompanied by a command for increasing the operating speed of the main engine so that the duration of a possible acceleration transient is reduced to correspond to said desired dynamics.

11. The assistance method according to claim 10, wherein said percentage threshold of the nominal operating speed of the main engine is comprised between 80% and 85%.
